# EUROPEAN PATENT APPLICATION

(11) **EP 2 963 598 A1**
(43) Date of publication of application: **06.01.2016**
(21) Application number: 14002258.3
(22) Date of filing: 01.07.2014
(51) Int. Cl.: G06Q 10/08

(54) **Part inventory system**

(71) Applicant: Bossard AG, 6301 Zug (CH)
(72) Inventor: Güttinger, Urs, 6312 Steinhausen (CH)
(74) Representative: Toleti, Martin

(57) **Abstract**

The invention relates to a method for controlling a parts inventory comprising a set of bins (8), wherein each bin (81) of the set is tagged with a detachably mounted electronic label (2) comprising an input means (1) for requesting an action via a wireless interface to an access point (3) and from there preferably via an electronic label control system to a remote inventory controller (4). By activating the input means (1) of such an electronic label (2), the electronic label (2) transmits a request signal (5) for requesting a parts inventory related action via the bidirectional wireless interface and the access point (3) to the remote inventory controller (4).

## Description

### Technical Field

The invention relates to a method for controlling a parts inventory.

### Background Art

Such method is used for controlling a parts inventory of parts, such as screws, nuts, bolts, electrical components, fasteners or pills. Usually, the maintenance of such an inventory is time consuming and failure might cause disruptions in an assembly line.

EP 0 915 325 A1 for example describes a storage comprising one or more racks which is equipped with an automated replenishing system. For this purpose, any containers in the rack are equipped with weight sensors indicating if the corresponding container is nearly empty and issuing an automatic order accordingly.

However, equipping each container with a weight sensor requires elaborate manufacturing. In addition, maintenance and repairs of the containers might be complicated.

### Disclosure of the Invention

The problem to be solved by the present invention is therefore to provide a method that allows secure and timely control of the parts inventory while providing a system that requires lower maintenance.

This problem is solved by a method for controlling a parts inventory comprising a set of bins, wherein each bin of the set is tagged with a detachably mounted electronic label comprising an input means for requesting an action via a wireless interface to an access point and from there preferably via an electronic label control system to a remote inventory controller. By activating the input means of such an electronic label, the electronic label transmits a request signal for requesting a parts inventory related action via the bidirectional wireless interface and the access point to the remote inventory controller.

It is understood that in one embodiment, an electronic label control system, preferably embodied in form of a software running on a computing hardware, may be considered as a functional part of the access point preferably serving as control of access point operations with respect to the electronic label and / or the remote inventory controller. In one embodiment, the electronic label control system may be a gateway. Hence, in case the access point generates a status signal as will be set out in one of the below embodiments, it preferably is the electronic label control system of the access point generating the status signal that is transmitted e.g. via an antenna of the access point to the electronic label. While the access point may preferably include such electronic label control system, the electronic label control system may not necessarily be physically arranged in a common box with other parts of the access point, but may be arranged distributed therefrom, but at least is assigned to a location of the parts inventory - as are other parts of the access point - while the remote inventory controller is considered to be arranged remote from the controlled parts inventory.

To identify the status of the requested action at the electronic label, the access point, and preferably its electronic label control system can send a status signal out of a set of status signals via the wireless interface to the electronic label and / or the remote inventory controller can send an action status signal out of a set of action status signals preferably via the electronic label control system of the access point and from there via the wireless interface to the electronic label, where the relevant status is shown on a screen.

In a preferred embodiment, the access point, and preferably its electronic label control system, generates status signals, preferably one or more different predefined ones building the set, and specifically one status signal. The remote inventory controller may generate different predefined action status signals building the set, preferably two or more action status signals, and specifically three action status signals.

In a preferred embodiment, the electronic label comprises a microcontroller and a memory unit, storing a set of status data, wherein a first status data out of a set of status data is shown on the screen in response to an activation of the input means, comprising the information that a confirmation of the receipt of the request signal from the remote inventory controller is awaited. The status data can comprise information on the present status of the request and on the part stored in the respective bin.

If there is no response from the remote inventory controller, e.g. within a certain predefined time, a second status data out of the set of status data can be shown on the screen comprising the information that the step of sending the action request to the remote inventory controller failed.

Preferably, the set of status data contains status data referring to further conditions than described above.

In an alternative embodiment, after receiving the request signal from the electronic label, the access point, and preferably its electronic label control system, automatically sends a first status signal to the electronic label, comprising the information that the confirmation of the receipt of the request signal from the remote inventory controller is awaited. Preferably, the set of status signals contains status signals referring to further conditions than described above.

In response to receiving the request signal from the access point at the remote inventory controller, the remote inventory controller sends a first action status signal to the electronic label. The requested action contained in such a request signal preferably comprises the replenishment of an empty bin with parts or the emptying of a filled bin from parts. A first action status signal sent from the remote inventory controller to the electronic label preferably confirms the receipt of the request signal.

In response to a trigger event, the remote inventory controller can send a second action status signal to the electronic label to confirm that the requested action has been triggered at the remote inventory controller. The trigger event can be a specific date, time, time interval, or order value. Triggering the requested action at the remote inventory controller activates the remote inventory controller to start processing the requested action.

In response to a termination input, the remote inventory controller can send a third action status signal to the electronic label to confirm that the requested action has been terminated at the remote inventory controller. The termination input can e.g. be a manual input or the preparation of a delivery note.

Preferably, the set of action status signals contains action status signals referring to further conditions than those described above.

In a preferred embodiment, the sequence of sending the status signals or the action status signals may vary. In the preferred embodiment, identifying the present status of the request and sending the status signal or the action status signal to the screen of the electronic label secures the control of the parts inventory.

To allow timely control of the parts inventory, the request signal is preferably transmitted immediately, meaning without delay, from the access point to the remote inventory controller after being received at the access point. In another embodiment, the request signals can also be collected at the access point and be transmitted in a predefined time interval.

Preferably, the access point can send the same request signal which it receives from the electronic label to the remote inventory controller or it can change the request signal or the communication protocol of the request signal before sending it to the remote inventory controller. The access point can also send the same action status signal which it receives from the remote inventory controller to the electronic label or it can change the action status signal or the communication protocol of the action status signal before sending it to the electronic label.

In a preferred embodiment, the method for controlling a parts inventory comprises the step of sending the action status signal from the remote inventory controller to the electronic label control system of the access point, preferably in form of a signal following a protocol having a status field. In the electronic label control system, it is preferred that a layout definition file is provided by the aid of which an image is rendered from the action status signal. The image then is sent via the access point to the electronic label, and the image is shown on the screen.

It is understood that in another embodiment, an electronic label control system, preferably embodied in form of a software running on a computing hardware, may be considered as a functional part of the remote inventory controller preferably serving as control of remote inventory controller operations with respect to the electronic label and / or the access point. In one embodiment, the electronic label control system may be a gateway. Hence, in case the remote inventory controller generates an action status signal as will be set out in one of the embodiments, it preferably is the electronic label control system of the remote inventory controller generating the action status signal that is transmitted via the access point and e.g. via an antenna of the access point to the electronic label. While the remote inventory controller may include such electronic label control system, the electronic label control system may not necessarily be physically arranged in a common box with other parts of the remote inventory controller, but may be arranged distributed therefrom, but at least is assigned to a location of the remote inventory controller, which is considered to be arranged remote from the controlled parts inventory.

According to another aspect of the present invention, a part inventory system comprises a set of bins, wherein each bin of the set of bins is tagged with a detachably mounted electronic label. The term "tagging the electronic label to a bin" refers to assigning the label to a specific bin. Hence, a bin tagged by an electronic label includes but not necessarily requires the physical attachment of the electronic label to the bin - which may be a preferred location for maintaining the electronic label, but may also include an electronic label detached from the assigned bin, e.g. when an operator detaches the electronic label from the assigned bin for, e.g. triggering a request by means of the input means of the electronic label. Each of these electronic labels comprises an input means for requesting an action at a remote inventory controller. In another embodiment, it can also be that a plurality of electronic labels is tagged to each bin and each electronic label of the plurality is capable of sending a request signal out of a set of request signals. Each electronic label also comprises a screen and is connectable, and advantageously, connected via a bidirectional wireless interface to the access point. The access point is connectable, and advantageously, virtually or physically connected to the remote inventory controller. In another embodiment, one electronic label can also be assigned to a set of bins, e.g. if the bins are assembled on a pallet or in a container by tagging the electronic label to the pallet or to the container.

The part inventory system comprises electronic labels and an access point which both comprise preferably a radio frequency receiver and emitter for their communication. The radio frequency receiver and emitter can also be configured as a transceiver. The electronic label comprises a radio frequency emitter and receiver which is preferably disposed inside the housing of the electronic label. In another embodiment, the radio frequency receiver and emitter can also be mounted at the outside of the housing. Other embodiments can also work with a receiver and emitter of frequencies other than radio frequency.

The part inventory system is preferably implemented in an assembly line of a manufacturer. The access point is preferably installed in the same manufacturing facility where the assembly line is located wherein the assembly line comprises the set of bins, preferably the bins are filled with specific parts, which are each tagged with an electronic label. Preferably, in response to an activation of individual input means, each electronic label sends an individual request signal such that the access point and the remote inventory controller can assign the individual request signal to the respective bin and the remote inventory controller can process the request accordingly to the bin, e.g. replenishment of the specific parts. In a preferred embodiment, the access point can comprise a computing or telecommunication device such as a personal computer, a server or a gateway comprising a software, collectively referred to as electronic label control system to control the communication with multiple electronic labels and to virtually connect to the remote inventory controller. Preferably, the electronic label control system of the access point collects the request signals received at the access point and forwards them once at a regular time interval, e.g. every hour to the remote inventory controller.

The access point is virtually connected to the remote inventory controller, preferably via the electronic label control system which serves as a gateway or router between the two, converting the protocol of the remote inventory controller, e.g. a conventional RPC to the protocol, e.g. an image or an image file for a communication between the access point and the electronic label, or vice versa. The remote inventory controller is preferably operating at a parts supplier located remotely from the part inventory system. The remote inventory controller preferably comprises a device, e.g. a computer, which is virtually connected to the access point. The remote inventory controller can preferably receive manual inputs from an operator located at the parts supplier facility. In addition, the remote inventory controller can be connected to an enterprise-resource-planning (ERP) software, which is running on a computer located within the part inventory system.

The remote inventory controller located at the parts supplier preferably responds to the request signal by sending a first action status signal to the electronic label to confirm the receipt of the request. Preferably, the request signal comprises a request for a replenishment of parts and in response to the trigger event, the parts supplier starts preparing the replenishment of parts for the assembly line and sends a second action status signal to the electronic label to confirm the processing of the requested action.

In a preferred embodiment, if the preparation of the replenishment is terminated at the parts supplier, the remote inventory controller located at the parts supplier sends a third action status signal in response to the termination input to the electronic label confirming the termination of the action request. The termination of the action request can e.g. be the accomplished preparation of a replenishment of parts. Preferably, after termination of the action request, the replenishment of parts is shipped to the assembly line for replenishment of the empty bin.

According to another aspect of the present invention, an electronic label is provided comprising an input means for requesting an action, e.g., at a remote inventory controller by sending a request signal. The input means may preferably be a button but can also be a touchpad, a capacitive or optical sensor. In addition, the electronic label comprises a screen to show the present status. In a preferred embodiment, the screen consumes low power and therefore is preferably based on electronic paper technology.

In a preferred embodiment, the electronic label comprises a mounting part which enables a non-permanent attachment to a bin. The mounting part can be a clamp mechanism which enables the attaching and detaching of the electronic label to the bin. However, in other embodiments the mechanism might be a screw coupling or an adhesive bonded joint. The preferred ability to attach and detach the electronic label to each bin, enables a part inventory system that simplifies the maintenance, as defect electronic labels or defect bins can be repaired or exchanged independently.

In a preferred embodiment, the electronic label comprises a microcontroller to control the radio frequency receiver and emitter, the screen, and the connection to the access point. In addition, the electronic label can comprise a battery as an energy source.

In a preferred embodiment, the electronic label comprises a memory unit to save a set of status data, wherein a status data out of the set can be shown on the screen. The microcontroller of the electronic label can further exchange the status data shown on the screen without being connected to the access point and the remote inventory controller, e.g. in case the connection between the electronic label and the access point and the remote inventory controller fails. Preferably, the status data comprises or is an image or an image file. In a preferred embodiment, the electronic label may be operated in a low power mode to save energy or in a normal working mode. Low power mode indicates a condition of the electronic label, in which the receiver and emitter and preferably other functions of the electronic label are turned off to save energy. Normal working mode indicates a condition of the electronic label, in which the receiver and emitter and all other functions of the electronic label are turned on. The electronic label can switch between the two modes, e.g. within a predefined time period, e.g. every 15 seconds it switches from the low power mode to the normal working mode to receive status signals or action status signals from the access point and switches back to low power mode afterwards.

In another preferred embodiment, the electronic label is not connected to the access point, e.g. if the electronic label is operating in low power mode. In response to the activation of the input means, the electronic label can connect to the access point, preferably by switching to the normal working mode. Preferably, after receiving a third action status signal from the remote inventory controller at the electronic label, the electronic label disconnects again from the access point, and preferably switches again to low power mode. The parts inventory may be considered as an inventory of parts, such as screws, nuts, bolts, electrical components, fasteners or pills. However, even larger parts such as components or assemblies may be considered as parts to be controlled in an inventory, according to an embodiment of the present invention.

A bin in turn may in one embodiment comprise a box or a container for such parts, or a pallet or a different repository for such parts subject to a size of the parts.

While it is preferred that the order of method steps is as listed in the claims, a different order shall be encompassed by the subject method claims, too, where technically applicable.

Other advantageous embodiments are listed in the dependent claims as well as in the description below.

### Brief Description of the Drawings

The invention will be better understood and objects other than those set forth above will become apparent from the following detailed description of embodiments thereof. Such description makes reference to the annexed drawings, wherein the figures show:
Fig. 1 a block diagram illustrating a part inventory system, a remote inventory controller, and an associate method for controlling a parts inventory according to embodiments of the present invention,
Fig. 2 a diagram of a part inventory system comprising a set of bins and an access point which communicates with a remote inventory controller outside of the part inventory system, according to an embodiment of the present invention,
Fig. 3 in a) a diagram of the front view of a housing of an electronic label of an embodiment of the present invention with details, b) a diagram of a back view of the electronic label and c) a diagram of a screen of the electronic label.

### Detailed Description of Embodiments of the

### Invention

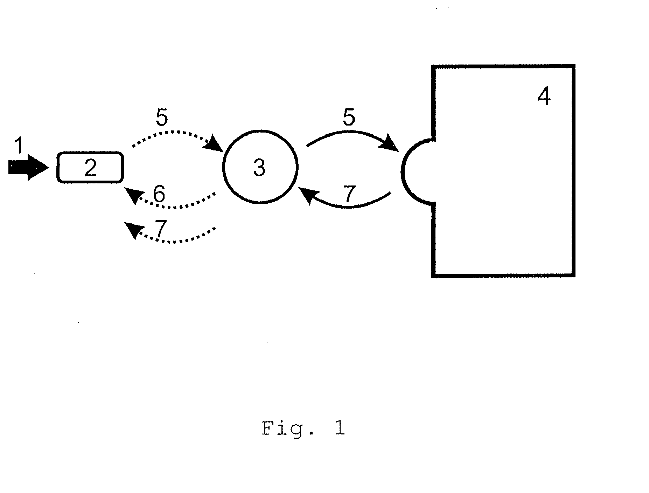

Figure 1 shows a block diagram of a part inventory system and a method for controlling a parts inventory according to embodiments of the present invention.

The part inventory system comprises an electronic label 2 assigned to a bin (not shown in Figure 1) and an access point 3. The access point 3 is virtually connected to a remote inventory controller 4.

In response to an activation by the input means 1, the electronic label 2 transmits a request signal 5 via a wireless interface to the access point 3 and preferably via an electronic label control system thereof to the remote inventory controller 4. The wireless transmission of the request signal 5 is indicated by a dotted arrow. In a preferred embodiment, the access point 3 sends the request signal 5 via a virtual connection to the remote inventory controller 4, the virtual connection is indicated by the solid arrow. The access point 3 can automatically respond to the request signal 5 by sending a status signal 6 out of a set of status signals via the wireless interface to the electronic label 2, wherein the wireless transmission of the status signal 6 is indicated by a dotted arrow. In response to receiving the request signal 5 at the inventory controller 4, an action status signal 7 out of a set of action status signals is sent to the electronic label 2 via the access point 3 and the wireless interface. The transmission of the action status signal 7 from the remote inventory controller 4 to the access point 3 is indicated by a solid arrow and the wireless transmission of the action status signal 7 from the access point 3 to the electronic label 2 is indicated by a dotted arrow.

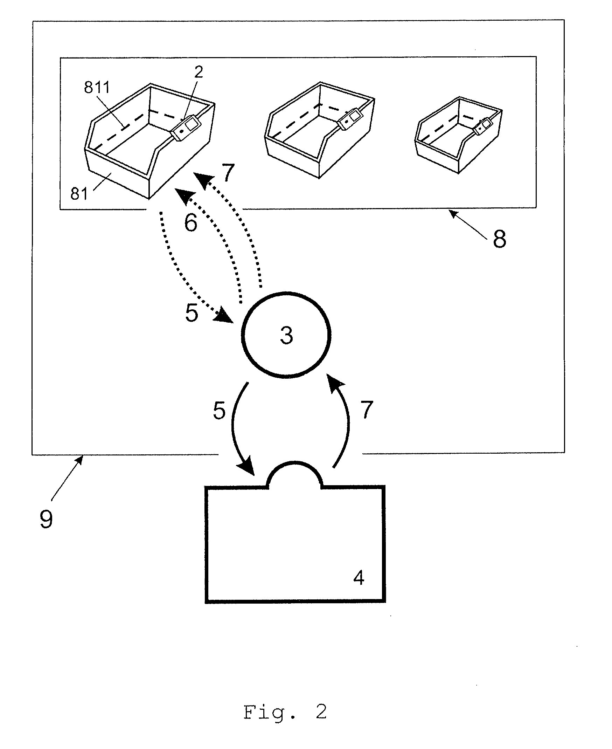

Figure 2 shows a diagram of a part inventory system 9 according to an embodiment of the present invention comprising a set of bins 8 wherein each bin 81 of the set is tagged with an electronic label 2. In a preferred embodiment, the bins 81 of the set 8 can have all the same size and shape or vary in size and shape, as long as the variations still allow to tag the electronic label 2 to the bin 81. The term bin is preferably interpreted broadly and can also mean container or pallet. Each bin may be filled by a different kind of parts, preferably screws, nuts, bolts, electrical components, fasteners or pills, to a different filling level subject to the consumption of the individual part. In a preferred embodiment, a filling level indicator 811 is applied to the bin 8 to refer to a critical filling level. The filling level indicator 811 can e.g. be an optical marker such as a line applied at the inside of the bin at a certain height. If the filling level of the bin drops below the critical filling level indicated by the filling level indicator 811, an operator can manually activate the input means 1 for requesting an action at the remote inventory controller 4, e.g. the replenishment of the bin 8 with parts, wherein the replenishment preferably comprises a defined quantity of parts. Preferably, by activating the input means more than once, the quantity of parts to be provided can be increased, e.g. multiplied by a predefined factor, with every additional activation of the input means conducted within a predefined timeframe, e.g. within the time lag before the remote inventory controller sends a second action status signal to the electronic label. Each electronic label 2 is connected via a bidirectional wireless interface to an access point 3. In a preferred embodiment, the electronic label 2 and the access point 3 both comprise a radio frequency receiver and emitter for the wireless communication. In a preferred embodiment, the set of bins 8 wherein each bin 8 is tagged with an electronic label 2 is spatially arranged within the coverage of the radio frequency receiver and emitter of the access point, e.g. the set of bins 8 and the access point are located within the same facility. In other embodiments, the wireless communication between the electronic label 2 and the access point 3 may be enabled with a communication technology other than radio frequency. The access point 3 is virtually connected to a remote inventory controller 4, preferably located spatially separated from the part inventory system 9, wherein the connection is preferably enabled via a virtual connection, e.g. a web-interface, and the request signal 5 is transmitted e.g. via a FTP (file transfer protocol) connection.

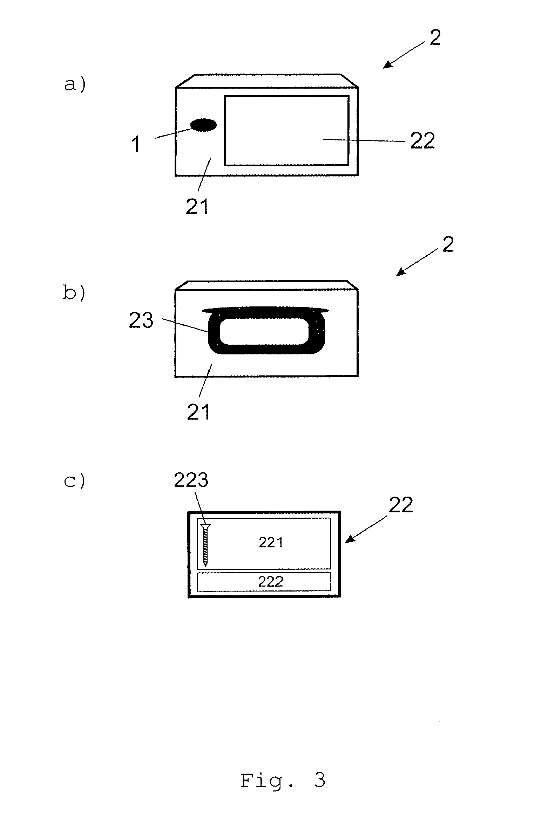

Figure 3 shows in a) a schema of a preferred embodiment a of the front side of an electronic label 2 with a housing 21 comprising an input means 1 for requesting an action at a remote inventory controller 4 and a screen 22. As shown in b), the electronic label 2 preferably comprises a mounting part on the back side of the housing 21 which may be a clamp mechanism 23 for attaching and detaching the electronic label 2 to each bin 81. As shown in c), a screen 22 of an electronic label 2 tagged to a bin 81 preferably shows in a first sector 221 of the screen 22 information on the part stored in the bin 81, and in a second sector 222 of the screen 22 shows information on the status of the requested action. The information shown in the first sector 221 of the screen can comprise the location of the bin 81 within the part inventory system, a product number of the part stored in the bin 81, a product description of the part, a pictogram 223 of the part, or further information. The information shown in the second sector 222 of the screen 22 can comprise the present status of the request, the estimated termination date of the requested action or the final termination date of the requested action, the quantity of parts of the requested replenishment, or further information. The second sector 222 can also be empty if there is no pending request. The sectioning of the screen and the content of the information shown on the screen are not limited to the embodiment described above and can also comprise further or less sectioning or further or less information in a further embodiment.

## Claims

1. A method for controlling a parts inventory, the parts inventory comprising a set of bins (8), wherein each bin (81) of the set of bins (8) is tagged with a detachably mounted electronic label (2), each electronic label (2) comprising an input means (1) for requesting an action at a remote inventory controller (4) and a screen (22), each electronic label (2) of the set being connected via a bidirectional wireless interface to an access point (3),
the method comprising the steps of
in response to an activation of the input means (1) of an electronic label (2) of the set transmitting a request signal (5) for requesting a parts inventory related action from the electronic label (2) via the wireless interface and the access point (3) to the remote inventory controller (4),
in response to receiving the request signal (5) at the remote inventory controller (4), automatically triggering the requested action at the remote inventory controller (4),
sending an action status signal (7) out of a set of action status signals to the electronic label (2), the action status signal (7) identifying a present status of the requested action, and
showing the present status on the screen (22) of the electronic label (2).

2. The method of claim 1 comprising the step of in response to receiving the request signal (5) from the electronic label (2) at the access point (3), automatically sending a first status signal (6) of a set of status signals from the access point (3) via the wireless interface to the electronic label (2) comprising the information that the confirmation of the receipt of the request signal (5) from the remote inventory controller (4) is awaited.

3. The method according to any of the preceding claims comprising the step of in response to receiving the request signal (5) at the remote inventory controller (4), sending a first action status signal (7) out of a set of action status signals from the remote inventory controller (4) via the access point (3) and the wireless interface to the electronic label (2) to confirm receipt of the request signal (5) at the remote inventory controller (4).

4. The method according to any of the preceding claims comprising the step of in response to a trigger event, sending a second action status signal (7) out of the set from the remote inventory controller (4) via the access point (3) and the wireless interface to the electronic label (2) to confirm a processing of the requested action at the remote inventory controller (4).

5. The method according to any of the preceding claims comprising the step of in response to a termination input, sending a third action status signal (7) out of the set from the remote inventory controller (4) via the access point (3) and the wireless interface to the electronic label (2) to confirm a termination of the action request at the remote inventory controller (4).

6. The method according to any of the preceding claims comprising the step of triggering the transmission of the request signal (5) in response to pushing a button of the input means (1), mounted onto the electronic label (2).

7. The method according to any of the preceding claims comprising the steps of sending the action status signal (7) according to a protocol having a status field for indicating the status from the remote inventory controller (4) to an electronic label control system of the access point (3), at the electronic label control system rendering an image from the action status signal (7) based on a layout definition file, and forwarding the image to the electronic label (2).

8. A part inventory system (9) comprising
a set of bins (8), wherein each bin (81) of the set is tagged with a detachably mounted electronic label (2),
each electronic label (2) comprising an input means (1) for requesting an action at a remote inventory controller (4),
each electronic label (2) comprising a screen (22),
each electronic label (2) being connectable via a bidirectional wireless interface to an access point (3), and
the access point (3) being connectable to the remote inventory controller (4).

9. The part inventory system (9) of claim 8 wherein each electronic label (2) of the set comprises a radio frequency receiver and emitter (24) and the access point (3) comprises a radio frequency receiver and emitter.

10. An electronic label (2) comprising an input means (1) for requesting an action,
a radio frequency receiver and emitter (24) for transmitting a request signal (5) in response to an activation of the input means (1), and
for receiving a status signal (6) out of a set of status signals or an action status signal (7) out of a set of action status signals for identifying a present status of the request, and
a screen (22) for showing the present status of the request.

11. The electronic label (2) of claim 10
wherein the electronic label (2) comprises a mounting part enabling non-permanent attachment to a bin (81).

12. The electronic label (2) of claim 11
wherein the mounting part comprises a clamp mechanism for attaching and detaching the electronic label to the bin (81).

13. The electronic label (2) of any of the claims 10 to 12 wherein the input means (1) comprises a button mounted onto the electronic label (2).

14. The electronic label (2) of any of the preceding claims 10 to 13 comprising a microcontroller and a memory unit for storing a set of status data to be shown on the screen in response to an activation of the input means.

15. The electronic label (2) of any of the claims 10 to 14, wherein said screen (22) comprises electronic paper technology.
